# EUROPÄISCHE PATENTANMELDUNG

(11) **EP 2 383 153 A2**
(43) Veröffentlichungstag der Anmeldung: **02.11.2011**
(21) Anmeldenummer: 11466009.5
(22) Anmeldetag: 22.04.2011
(51) Int. Cl.: B60R 21/06

(54) **Rückhaltesystem für ein Kraftfahrzeug**

(30) Priorität: 29.04.2010 CZ 20100324
(71) Anmelder: Skoda Auto a.s., 293 60 Mladá Boleslav (CZ)
(72) Erfinder: Zetková, Dana, 51801 Dobruska (CZ); Mzik, Jirí, 55001 Hejtmánkovice (CZ); Kraus, Ladislav, 51236 Horní Branná (CZ)

(57) **Zusammenfassung**

Rückhaltesystem für ein Kraftfahrzeug, insbesondere ein selbstaufwickelndes Netzrollo zur Abtrennung des Gepäckraumes vom Fahrgastraum, das eine Wickelwelle (2), die eine abwickelbare Werkstoffbahn (3) trägt und eine Sperrscheibe (6), die mit einer Sperrklinke (10) kooperiert, aufweist. Die Sperrklinke (10) ist zwischen der freilaufenden und der verrasteten Position umstellbar, in der die Sperrscheibe (6) gegen eine Drehung in einer Richtung blockiert ist. Die Bewegung der Sperrklinke (10) aus der freilaufenden in die verrastete Position wird durch die Bremse (17) verzögert. Die Sperrscheibe (6) weist eine Steuerkurve (8) auf, die in der Abhängigkeit derer Winkeldrehung die Sperrklinke (10) in freilaufender Position hält oder deren Verschiebung in die verrastete Position ermöglicht Die Wickelwelle ist mit der Sperrscheibe (6) über ein Reduzierzahngetriebe kinematisch verbunden. Die Sperrklinke (10) blockiert in der Sperrposition die Sperrscheibe (6) gegen die durch die Drehung der Wickelwelle bei der Abwicklung der Werkstoffbahn (3) ausgelöste Drehung. Der Vorteil dieser Lösung besteht in der Verhinderung auch einer langsamen Abwicklung des Rollos bei der Abbremsung des Fahrzeuges bei einer einfachen Konstruktion

## Beschreibung

### Technisches Gebiet

Die Erfindung betrifft ein Rückhaltesystem für ein Kraftfahrzeug, insbesondere ein selbstaufwickelndes Netzrollo zur Abtrennung des Gepäckraumes vom Fahrgastraum.

### Bisheriger Stand der Technik

Gegenwärtig werden Personenkraftwagen mit einräumiger bzw. zweiräumiger Karosserie oft mit einer Sicherheitstrennwand ausgestattet, welche sich vertikal hinter den Rücksitzlehnen ausdehnt. Diese Trennwand verhindert Gegenständen, die sich im Gepäckraum über der Oberkannte der Vordersitz- oder Rücksitzlehnen befinden, dass diese im Fall eines Unfalls oder einer starken Bremsung in den Fahrgastraum eindringen können. Zur Sicherstellung der Fahrzeugvariabilität sind diese Trennwände am häufigsten in Form eines selbstaufwickelndes Netzrollos ausgeführt, damit eine gute Sicht nach hinten bei hoher Fahrzeugvariabilität gewährleistet wird. Die Kassette mit dem Rollo wird in der Regel an der Rückseite der Rücksitzlehnen befestigt, damit das Rollo zur Abtrennung des Fahrgastraumes nicht nur bei der für das Sitzen bestimmten aufrechten Position der Rücksitze, sondern auch nach dem Umklappen der Rücksitzlehnen in die waagerechte Position zwecks Gepäckraumerweiterung verwendet werden kann. In beiden Fällen rollt der Anwender die benötigte Rollolänge ab und befestigt deren Ende in die im Dachhimmel ausgebildeten Verankerungen vertikal über der Rollokassette in der zugehörigen Position. Bei einer Fahrzeugabbremsung haben die Gegenstände im Gepäckraum die Tendenz sich nach vorne zur Trennwand zu bewegen, und dadurch das Rollo abzuwickeln. Damit diese Gegenstände nicht in den Fahrgastraum eindringen, muss diese weitere Abwicklung in beiden möglichen Positionen der Trennwand verhindert werden.

Die Verrastung in der Position der umgeklappten Lehnen kann durch eine geeignete Wahl der abzuwickelnden Rollolänge gelöst werden, die im Wesentlichen genau so lang wie die Entfernung der Kassette von den zugehörigen Verankerungen im Dachhimmel ist. In dieser Position ist somit keine weitere Verrastung gegen ein weiteres Abwickeln nötig. Für die Verrastung bei aufrechter Position der Sitze, also nach dem Abwickeln einer kürzeren als der gesamten Rollolänge, werden gegenwärtig verschiedene Mechanismen verwendet, welche die Aufwickelwelle bei einer Überschreitung der Grenzwerte der Abwickelgeschwindigkeit oder der Längsabbremsung des Fahrzeuges gegen Drehung versperren. Diese Mechanismen arbeiten allgemein auf ähnlichen Prinzipien, wie die selbstaufwickelnden Sicherheitsgurte und hindern dem langsamen Abwickeln des Rollos nicht. Bei wiederholter Bremsung unter dem Verzögerungsgrenzwert kann es so zu einer sukzessiven Verschiebung des Gepäcks bis in den Fahrgastraum kommen. Deshalb werden zusätzliche Mechanismen verwendet, welche die Wickelwelle gegen das Drehen in der Abwicklungsrichtung nach dem Abwickeln einer bestimmten Rollolänge versperren, die der Entfernung der Kassette von den entsprechenden Verankerungen im Dachhimmel bei aufrechter Position der Sitzlehnen entspricht.

Eines dieser Mechanismen ist im Dokument DE 102 07 575 A1 beschrieben: An der Wickelwelle ist eine Rastscheibe mit vielen Aussparungen angebracht, in die eine Sperrklinke eingreift, die die Welle gegen ein Drehen in Abwickelrichtung des Rollos sichert. Der Mechanismus ist mit einem Zählmechanismus ausgestattet, welcher sich aus einem auf der Wickelwelle angebrachten Antriebsrad mit einem Hebedaumen und einem Abtriebsrad zusammensetzt, welches mit einer Steuernockenwelle mit einer Aussparung ausgestattet ist. Die Sperrklinke befindet sich an einem Schwenkhebel, welcher ein Stößel trägt, welcher an der Nockenwelle anliegt. Die Steuerungsnockenwelle ermöglicht eine Verschiebung der Sperrklinke in die verrastete Position nur nach dem Einrasten des Stößels in die Aussparung. Die Bewegung des Schwenkhebels wird durch eine Viskobremse gebremst. In der aufgewickelten Position des Rollos sitzt der Stößel auf der Nockenwelle auf und die Sperrklinke sichert die Welle gegen die Drehung nicht. Bei dem Abwickeln des Rollos verdreht der Hebedaumen bei jeder Umdrehung die Steuerungsnockenwelle. Nach der Umdrehungsanzahl, die der geforderten Länge der Rolloabwicklung entspricht, befindet sich der Stößel im Bereich der Aussparung der Steuerungsnockenwelle. Durch den Einfluss der Bremse verschiebt sich die Sperrklinke erst mit einer gewissen Verspätung in die verrastete Position. Wenn die Drehung der Welle andauert, verfehlt die Aussparung den Stößel und dieser legt sich wiederum an die Nockenwelle an. Die Drehung der Welle wird dadurch nicht sofort nach dem Erreichen der Rolllänge blockiert, die der Entfernung zwischen der Kassette und den zugehörigen Verankerungen im Dachhimmel in der aufrechten Sitzposition entspricht, sondern das weitere Abwickeln wird dadurch ermöglicht. Zur Sicherung kommt es mit einer gewissen Verspätung nach der Unterbrechung der Rolloabwicklung, welche durch die Befestigung des Rollos in der Arbeitsposition signalisiert wird. Die Drehung in der Richtung des Aufwickelns wird nicht blockiert, nach dem Ausklinken aus den Verankerungen kann deshalb das Rollo wieder eigenständig in die Kassette aufgewickelt werden.

Dieser Mechanismus umfasst sehr viele Bauteile und ist deshalb nicht nur teuer, sondern auch störungsanfälliger.

### Darstellung der Erfindung

Die Aufgabe wird durch ein erfindungsgemäßes Rückhaltesystem für ein Kraftfahrzeug, insbesondere durch ein selbstaufwickelndes Netzrollo zur Abtrennung eines Gepäckraumes vom Fahrgastraum gelöst. Das Rollo weist eine Wickelwelle auf, die eine abwickelbare Bahn eines ausreichend festen und dabei durchsichtigen Werkstoffs, z.B. festes Netzgewebe u.Ä. trägt. Mit dieser Wickelwelle ist über ein Reduzierzahnradgetriebe die Sperr-Drehscheibe kinematisch verbunden. Die Drehung der Sperrscheibe wird so zwangsmäßig mit der Drehung der Wickelwelle verbunden, wobei die Sperrscheibe geringere Drehzahl als die Wickelwelle aufweist. Die Sperrscheibe kooperiert mit der Sperrklinke, die zwischen einer freilaufenden und verrasteten Position verschiebbar ist. Die Sperrklinke blockiert in der verrasteten Position die Sperrscheibe gegen die, durch die Drehung der Wickelwelle bei der Abwicklung der Werkstoffbahn ausgelöste, Drehung. Jedoch die Drehung der Sperrscheibe in der Gegenrichtung d.h. durch die Aufwicklung der Werkstoffbahn ausgelöst, wird nicht verhindert. Die Bewegung der Sperrklinke aus der freilaufenden in die verrastete Position wird durch eine Bremse verzögert, vorzugsweise durch eine die hochviskose Flüssigkeit nutzende Rotationsbremse. Die Sperrscheibe weist eine Steuerkurve auf, die in Abhängigkeit von ihrem Drehwinkel die Sperrklinke in der freilaufenden Position hält oder die Verschiebung in die verrastete Position ermöglicht. Die Sperrscheibe erfüllt somit eine Steuer- sowie Sperrfunktion, sodass für diese zwei Aufgaben keine zwei separaten Mechanismen notwendig sind, was die erfindungsgemäße Lösung gegenüber dem Stand der Technik verbilligt und vereinfacht. Durch die Wahl eines geeigneten Übersetzungsverhältnisses des Zahngetriebes und des Steuerkurvenverlaufes kann die gewünschte Länge der Werkstoffbahn eingestellt werden, nach derer Abwicklung der Vorschub der Sperrklinke in die verrastete Position ermöglicht wird und die weitere Drehung der Sperrscheibe verhindert wird. Der Sperrmoment wird über das Zahngetriebe auf die Wickelwelle übertragen, die sich nicht drehen kann und si wird das Werkstoffbahn weiter nicht abgewickelt. Die Aufwicklung wird jedoch nicht gesperrt.

Die Steuerkurve hält die Sperrklinke vorteilhaft in freilaufender Position wenigstens bei ganz aufgewickelter Werkstoffbahn und ermöglicht ihre Umstellung in die verrastete Position nach solcher Drehung der Sperrscheibe, welche durch die Drehung der Wickelwelle entsprechend der Abwicklung der Werkstoffbahn in der festgelegten Länge, die kleiner als die Gesamtlänge der Werkstoffbahn ist, erzielt wird. Die festgelegte Länge stimmt vorteilhafterweise mit der Entfernung der Rollokassette von den Verankerungen im Dachhimmel bei senkrechter Sitzlehnenposition überein. Bei der Abwicklung des Rollos macht die Wickelwelle mehrere Umdrehungen, bis die festgelegte Länge abgewickelt wird. Der Durchmesser der Wickelwelle und das Übersetzungsverhältnis des Zahngetriebes müssen hinsichtlich der Werkstoffbahnstärke so gewählt werden, damit der Steuernocken nach der Abwicklung der festgelegten Länge andere Winkelstellung gegenüber der Sperrklinke bzw. dem festen Rolloteil einnimmt, als bei komplett aufgewickelter Werkstoffbahn.

In einer vorteilhaften Ausführung umfasst das Getriebe ein mit der Wickelwelle undrehbar verbundenes Antriebsrad und eine angetriebene Innenverzahnung der Sperrscheibe. Die Drehachse der Sperrscheibe ist gleichlaufend mit der Drehachse der Wickelwelle. Solche Ausführung ist sehr einfach und billig.

Sollen höhere Kräfte zwischen der Wickelwelle und der Sperrscheibe übertragen werden, ist vorteilhafter ein Planetengetriebe zu wählen. Das Getriebe umfasst ein mit der Wickelwelle undrehbar verbundenes Antriebsrad, eine angetriebene Innenverzahnung der Sperrscheibe und wenigstens ein zwischen diesen angeordnetes Planetenrad. Die Planetenräder sind drehbar auf den mit dem festen Rolloteil verbundenen Bolzen gelagert. Durch die Wahl der Anzahl der Planetenräder kann die höchstmögliche Übertragungskraft eingestellt werden. Die Drehachse der Sperrscheibe ist identisch mit der Drehachse der Wickelwelle, wodurch eine kompakte Bauweise erzielt wird. Im solchen Fall ist die Drehrichtung der Sperrscheibe gegenläufig zur Drehrichtung der Wickelwelle.

Offensichtlich können auch andere Typen der Zahngetriebe verwendet werden, z.B. zwei Räder mit Außenverzahnung u. ä.

Die Sperrklinke weist mindestens einen Sperrzahn und die Steuerkurve wenigstens eine diesem Sperrzahn entsprechende Aussparung auf. Beim geforderten höheren Sperrmoment oder bei eingeschränkten Raummöglichkeiten können mehrere kleinere Zähne und ihnen entsprechende Aussparungen verwendet sein. Vorteilhafterweise ist in der Steuerkurve lediglich eine Aussparung ausgebildet, wodurch ein großer Drehwinkelbereich der Welle geschafft wird, in dem die Sperrklinke entsperrt ist. In der Steuerkurve können auch mehrere solche Aussparungen ausgebildet werden, die mit gleichmäßigem bzw. ungleichmäßigem Drehwinkel verteilt sind.

Die Sperrklinke ist mit einer Kraft vorgespannt, durch die sie aus der freilaufenden in die versperrte Position verschoben wird. Die Kraft andrückt also den Zahn zur Oberfläche der Steuerkurve und gewährleistet so das selbsttätige Einrasten. Die Kraft kann durch ein elastisches Element bewirkt werden, z.B. durch eine separate Torsions- bzw. Zugfeder, bzw. durch eine Kunststoffblattfeder, welche direkt als Bestandteil der Sperrklinke ausgebildet ist. Die Kraft kann auch durch die Gravitationskraft bewirkt werden, die auf ein geeignet an der Sperrklinke angeordnetes Gewicht wirkt.

Der Sperrzahn weist eine Sperrfläche zur Sperrung der Scheibe gegen das Drehen in der Abwickelrichtung der Werkstoffbahn und eine Steuerfläche für den Kontakt mit der Steuerkurve auf. Bei der Drehung liegt der Sperrzahn mit seiner Steuerfläche an die Steuerkurve nur an den Stellen an, wo seine Profiländerung allmählich verläuft. Bei seiner stärkeren Änderung in der Wirkungsrichtung der Kraft, welche die Sperrklinke vorspannt, wird die Bewegungsgeschwindigkeit der Sperrklinke durch die Bremse so begrenzt, dass sich die Sperrklinke von der Fläche der Steuerkurve entfernt und erst mit einer Verzögerung und einem Drehwinkel auf dieser aufsetzt.

Die Steuerkurve umfasst vorteilhafterweise einen radialen Nocken, wobei sich die Aussparung für den Sperrzahn näher an der Drehachse der Sperrscheibe als der restliche Teil der Steuerkurve befindet. Der radiale Nocken kann im Wesentlichen eine Kreisform haben, die gegenüber der Drehachse der Sperrscheibe achsenversetzt ist. Die Sperrklinke ist vorteilhafterweise schwenkbar gelagert, jedoch kann auch eine z.B. Schubsperrklinke verwendet werden, was jedoch hinsichtlich des Einbauraums aufwändiger wäre. Die räumlich sparsamste Lösung kann mit einer im Wesentlichen U-förmigen Sperrklinke erzielt werden, welche die Sperrscheibe umschließt. An einem Ende ist diese drehbar oder schwenkbar gelagert, am gegenüberliegenden Ende weist diese eine Verzahnung für die Rotationsbremse und an der Innenseite einen Sperrzahn auf.

In der vollständig aufgewickelten Position der Werkstoffbahn lehnt sich der Sperrzahn außerhalb der Aussparung an die Steuerkurve an und verhindert so die Drehung der Welle nicht. Bei der Abwicklung der Werkstoffbahn wird die Wickelwelle und über die Übersetzung auch die Sperrscheibe gedreht und der Sperrzahn kopiert die Oberfläche der Steuerkurve. Bei üblicher Drehgeschwindigkeit rastet der Sperrzahn nicht sofort ein, nach dem sich die Sperrscheibe mit der Aussparung ihm zudreht, da seine Bewegung durch die Bremse verzögert wird. Sein Einrasten in die Aussparung ist erst mit einer bestimmten Verzögerung möglich und diese Zeitverzögerung ermöglicht dem Anwender auch eine größere als die festgelegte Länge der Werkstoffbahn abzuwickeln. Nach der Abwicklung der festgelegten Länge, welche der Entfernung von der Kassette zu den zugehörigen Verankerungen im Dachhimmel bei aufrechter Sitzlehnenposition entspricht, dreht sich die Sperrscheibe mit der Aussparung zu dem Sperrzahn zu, welcher jedoch von der Aussparung noch entfernt ist und sich langsam zu dieser hinbewegt. Das Einrasten des Sperrzahns in die Aussparung und damit die Sperrung der Wickelwelle gegen eine weitere Abwicklung der Werkstoffbahn erfolgt erst mit einer Verzögerung nach dem Anhalten der Drehung, wodurch eine problemlose Rollobefestigung ermöglicht wird. Nach dem Einrasten des Sperrzahns in die Aussparung wird die Sperrscheibe und über die Übersetzung auch die Wickelwelle gegen Drehung blockiert, sodass die Werkstoffbahn infolge z.B. eines Vorschubs eines Gegenstandes im Gepäckraum bei einer Abbremsung nicht abgewickelt wird.

Beim Aufwickeln hakt der Anwender das Rollo aus der Verankerung aus, die Welle beginnt sich durch die Einwirkung des Wickelmechanismus in die Aufwicklungsrichtung zu drehen, wobei über die Übersetzung auch die Sperrscheibe gedreht wird, der Sperrzahn läuft aus der Aussparung aus und die Welle dreht sich frei bis zur vollständigen Aufwicklung der Werkstoffbahn.

Ein großer Vorteil des erfindungsgemäßen Rückhaltesystems ist die Einfachheit, denn der Sperrzahn der Sperrklinke zugleich die Funktion des Steuerstössels und des Sperrelementes erfüllt. Das erfindungsgemäße Rückhaltesystem kann selbstständig oder in der Kombination mit gängig verwendeten Mechanismen funktionieren, welche die Aufwickelwelle bei einer Überschreitung der Grenzwerte der Abwickelgeschwindigkeit oder der Längsabbremsung des Fahrzeuges gegen Drehung sichern. Diese können vorteilhafterweise am gegenüberliegenden Ende der Wickelwelle angeordnet werden.

### Übersicht der Figuren der Zeichnungen

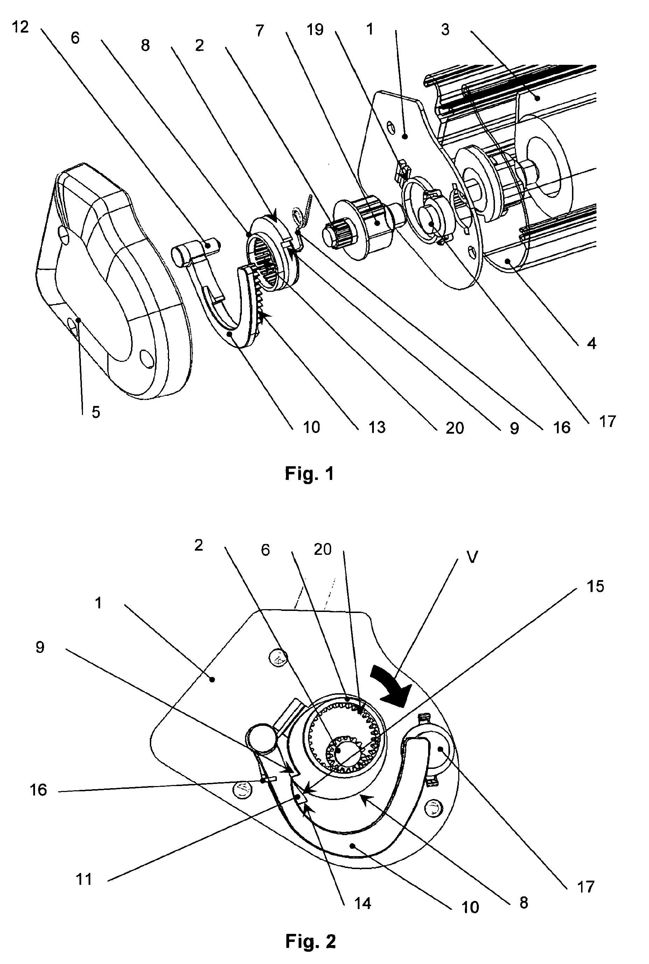

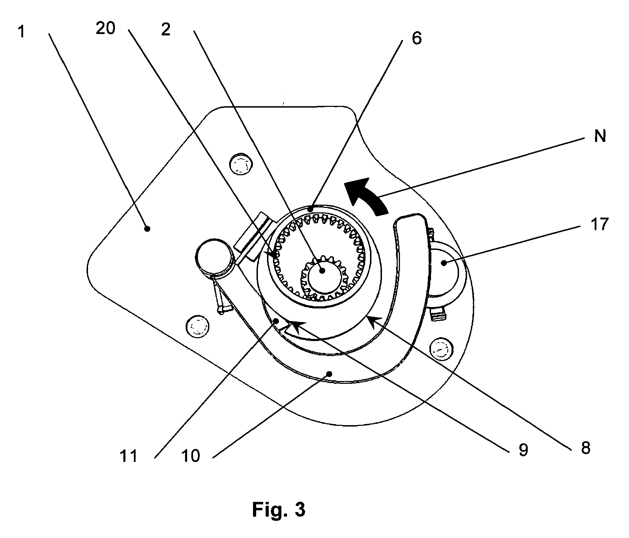

In der Fig. **1** ist ein Detail des erfindungsgemäßen Rückhaltesystems in einer Explosionszeichnung in einer Diagonalansicht von außen dargestellt. In den Fig. 2 und 3 befindet sich das Detail des zusammengesetzten Rückhaltesystems in einer Außenansicht, wobei in Fig. 2 die entsperrte Position der Sperrklinke bei voll aufgewickelter Werkstoffbahn und in Fig. 3 die verrastete Position der Sperrklinke dargestellt ist.

### Ausführungsbeispiel der Erfindung

In den beigefügten Abbildungen ist das Beispiel einer der möglichen Ausführungen der Erfindung dargestellt. Das Rollo umfasst die Kassette **4**, an deren Enden die Grundplatten **1** und die Abdeckungen **5** angebracht sind. An der näher nicht dargestellten Wickelwelle ist die Werkstoffbahn **3** aufgewickelt, die mit einem Ende an diese befestigt ist und auf dem anderen Ende eine nicht dargestellte Endstange für die Befestigung in den Verankerungen im Fahrzeugdachhimmel aufweist. Die Wickelwelle ist drehbar in den Öffnungen der Grundplatten **1** gelagert und weist eine näher nicht dargestellte Wickelvorrichtung, z.B. eine Torsionsfeder auf. Am dargestellten Ende ist in der Wickelwelle ein Mitnehmer **7** aufgesteckt. Der Mitnehmer **7** weist einerseits Rillen für die undrehbare Verbindung mit der Wickelwelle und an der gegenüberliegenden Seite das Antriebszahnrad **2** auf.

Die Grundplatte **1** weist einen Bundring **19** auf, der exzentrisch gegenüber der Öffnung der Wickelwellenlagerung angeordnet ist. Der entsprechende koaxiale Bundring ist auch in der Abdeckung **5** ausgebildet. In den Bundringen **19** ist drehbar die Sperrscheibe **6** gelagert. Die Sperrscheibe **6** ist ringförmig und weist auf der Innenoberfläche eine Verzahnung **20** auf, mit der sie in die Verzahnung des Antriebsrades **2** eingreift. An ihrem Außendurchmesser weist die Sperrscheibe **6** einen Radialnocken, dessen Oberfläche eine Steuerkurve **8** bildet, und eine diese Kurve unterbrechende Aussparung **9** auf. Der Nocken ist im Wesentlichen kreisförmig und gegenüber der Drehachse der Sperrscheibe **6** exzentrisch angeordnet.

Die Sperrklinke **10** weist im Wesentlichen eine U-Form auf und schließt die Sperrscheibe **6** um. Mit einem Ende ist sie schwenkbar in der Grundplatte**1** mit einem Bolzen **12** gelagert und am anderen Ende weist sie an der Außenseite eine Verzahnung **13** für die Bremse **17** auf. Die Bremse **17** ist eine die hoch viskose Flüssigkeit nutzende Rotationsbremse, jedoch kann auch eine Reibungsbremse oder andere genutzt werden. Die Sperrklinke **10** weist an ihrer der Sperrscheibe **6** zugewandten Innenseite einen Zahn **11** auf. Der Zahn **11** weist eine Steuerfläche **15**, die im Wesentlichen tangential zur Oberfläche der Steuerkurve **8** und mit dieser Oberfläche im Kontakt ist, und eine Sperrfläche **14** auf, die zur Oberfläche der Steuerkurve **8** im Wesentlichen senkrecht ist und die Sperrscheibe **6** gegen die Drehung in der Abwickelrichtung der Werkstoffbahn blockiert. Die Sperrklinke **10** wird an die Oberfläche der Steuerkurve 8 durch die Torsionsfeder **16** angedrückt.

In Fig. 2 ist die Sperrklinke in der freilaufender Position bei voll aufgewickelter Werkstoffbahn **3** dargestellt. Die Steuerfläche **15** des Zahns **11** liegt an der Steuerkurve **8** außerhalb der Aussparung **9** an und die Drehung der Sperrscheibe **6** ist in beiden Richtungen möglich. Bei Abwicklung dreht sich das Antriebsrad **2** und auch die Sperrscheibe **6** in Richtung V und die Steuerfläche **15** gleitet auf der Steuerkurve **8**. Nach der Abwicklung der festgelegten Länge der Werkstoffbahn **3** dreht sich die Aussparung **9** dem Zahn **11** zu. Die festgelegte Länge entspricht der Entfernung von der Kassette zu den entsprechenden Verankerungen im Dachhimmel bei aufrechter Position der Sitzlehnen. Die Bremse **17** verzögert jedoch die Bewegung der Sperrklinke **10** insoweit, dass bei einer üblichen Geschwindigkeit der Abwicklung der Werkstoffbahn **3** und der Drehung der Sperrscheibe **6** sich der Halbmesser der Steuerkurve **8** schneller verringert als sich die Sperrklinke **10** unter Einwirkung der Feder **16** bewegt. Die Steuerfläche **15** entfernt sich dadurch von der Steuerkurve **8** und bis zur Wiederaufsetzung wird die Aussparung **9** außerhalb des Zahnes **11** gedreht und die Steuerfläche **5** setzt nun wieder auf den glatten Teil auf und hindert die weitere Drehung bzw. Abwicklung nicht. Dadurch wird die Abwicklung einer größeren als der festgelegten Länge der Werkstoffbahn **3** für eventuelle Verankerung des Rollos zum Dachhimmel bei umgeklappten Rücksitzlehnen ermöglicht. In dieser Position muss die weitere Abwicklung nicht blockiert werden, da diese einfach durch die Gesamtlänge der Werkstoffbahn **3** einschränkbar ist.

Die versperrte Position ist in Fig. 3 dargestellt. Nach dem Herausziehen der Werkstoffbahn **3** in der festgelegten Länge, die der Entfernung der Kassette von den entsprechenden Verankerungen am Dachhimmel bei aufrechter Position der Sitzlehnen entspricht, dreht sich die Sperrscheibe **6** mit ihrer Aussparung **9** dem Zahnbereich **1**1 zu. Nach dem Einrasten der Endstange des Rollos in den Verankerungen am Dachhimmel wird infolge des selbstaufwickelnden Mechanismus eine Drehung in der Aufwicklungsrichtung N bis zur Straffung der Werkstoffbahn **3** und die Einsenkung des Zahnes **11** in die Aussparung **9** bewirkt. Dadurch wird die Drehung der Sperrscheibe **6** in der Abwicklungsrichtung V und über die Innenverzahnung **20** und das Antriebsrad **2** auch die Drehung der Wickelwelle blockiert. Die Werkstoffbahn **3** kann nicht weiter abgewickelt werden und die eventuell sich bewegende Gegenstände können bei einer Abbremsung nicht aus dem Gepäckraum in den Fahrgastraum eindringen. Der Zahn **11** kann mit seiner Steuerfläche **15** mit gewissem kleinem Winkelvorlauf vor der Aussparung **9** auch noch auf die Steuerkurve **8** aufsetzen, jedoch immer auf den Kurventeil mit abfallendem Halbmesser. So kann ein bestimmter Spielraum geschafft werden, der die Drehung der Wickelwelle vor der vollen Versperrung ermöglicht. Dies kann bei der nutzungsbedingten unterschiedlichen Dichte der Aufwicklung der Werkstoffbahn **3** auf der Wickelwelle **2** vorteilhaft sein, da der genaue Drehwinkel zwischen der Position bei komplett aufgewickeltem Werkstoffbahn und der Position bei der Abwicklung der festgelegten Länge kann mit gewisser Toleranz unterschiedlich sein. Dann kann die Sperrfläche **14** und ihr entsprechender Teil der Aussparung geneigt gegen die Abwicklungsrichtung ausgebildet werden, wodurch ein sicherer Kontakt zwischen dem Zahn **11** und der Aussparung **9** erzielt wird. Erforderlicherweise soll der Zahn **11** immer noch vor der Aussparung **9** oder direkt in diese auf die Steuerkurve **8** aufsetzen, jedoch nie dahinter. Dies hätte die Folge, dass die Wickelwelle **2** gegen die Drehung und freie Abwicklung der Werkstoffbahn 3 nicht blockiert wird.

Nach dem Loslösen der Endstange aus den Verankerungen kann sich die Wickelwelle **2** infolge der Einwirkung des selbstaufwickelnden Mechanismus bis zur kompletter Aufwicklung frei drehen. Für das Loslösen aus den Verankerungen ist in der Regel ein kleiner Vorschub der Endstange in Richtung von der Rollokassette **4** notwendig. Dies wird entweder durch den oben genannten Winkelspielraum zwischen dem Zahn **11** und der Aussparung **9** bis zur vollen Versperrung oder bei gefordertem Mindestspiel durch eine elastische Zugverformung der Werkstoffbahn **3** ermöglicht.

### Gewerbliche Anwendbarkeit

**Das erfindungsgemäße Rückhaltesystem für ein Kraftfahrzeug kann bei allen Fahrzeugen genutzt werden, wenn der Fahrgastraum vom Gepäckraum getrennt bzw. der Gepäckraum geteilt werden soll.**

## Patentansprüche

1. Rückhaltesystem für ein Kraftfahrzeug, insbesondere ein selbstaufwickeindes Netzrollo zur Abtrennung des Gepäckraumes vom Fahrgastraum, das
- eine Wickelwelle, die eine abwickelbare Werkstoffbahn (3) trägt,
- eine Sperrscheibe (6), die mit einer Sperrklinke (10) kooperiert, welche zwischen der freilaufenden und verrasteten Position verlagerbar ist, wobei die Sperrklinke (10) in der verrasteten Position die Sperrscheibe (6) gegen die Drehung in Richtung der Abwicklung der Werkstoffbahn (3) blockiert,
- und eine Bremse (17), welche die Bewegung der Sperrklinke (10) aus der freilaufenden in die verrastete Position verzögert,
aufweist, wobei die Sperrscheibe (6) eine Steuerkurve (8) aufweist, die in der Abhängigkeit zu deren Verdrehung die Sperrklinke (10) in freilaufender Position hält oder deren Verschiebung in die verrastete Position ermöglicht,
**dadurch gekennzeichnet, dass** die Wickelwelle mit der Sperrscheibe (6) über ein Reduzierzahngetriebe kinematisch verbunden ist und dass die Sperrklinke (10) in der verrasteten Position die Sperrscheibe (6) gegen die, durch die Drehung der Wickelwelle bei der Abwicklung der Werkstoffbahn (3) ausgelöste, Drehung blockiert.

2. Rückhaltesystem für ein Kraftfahrzeug nach Anspruch 1, **dadurch gekennzeichnet** t dass die Steuerkurve (8) die Sperrklinke (10) in freilaufender Position wenigstens bei vollständig aufgewickelte Werkstoffbahn (3) hält und deren Umstellung in die verrastete Position nach solcher Drehung der Sperrscheibe (6) ermöglicht, welche durch die Drehung der Wickelwelle entsprechend der Abwicklung der Werkstoffbahn (3) in der festgelegten Länge, die kleiner als seine Gesamtlänge ist, erzielt wird.

3. Rückhaltesystem für ein Kraftfahrzeug nach einem der vorangegangenen Ansprüche, **dadurch gekennzeichnet, dass** das Zahngetriebe ein mit der Wickelwelle undrehbar verbundenes Antriebsrad (2) und eine angetriebene Innenverzahnung (20) der Sperrscheibe (6) umfasst.

4. Rückhaltesystem für ein Kraftfahrzeug nach Anspruch 1 oder 2, **dadurch gekennzeichnet, dass** die Drehachse der Sperrscheibe (6) identisch mit der Drehachse der Wickelwelle ist und dass das Zahngetriebe ein Planetengetriebe umfasst, das ein mit der Wickelwelle undrehbar verbundenes Antriebsrad (2), eine angetriebene Innenverzahnung (20) der Sperrscheibe (6) und wenigstens ein zwischen diesen angeordnetes Planetenrad aufweist.

5. Rückhaltesystem für ein Kraftfahrzeug nach einem der vorangegangenen Ansprüche **dadurch gekennzeichnet, dass** dieSperrklinke(10) mindestens einen Sperrzahn (11) und die Steuerkurve (8) wenigstens eine, diesem Sperrzahn (11) entsprechende Aussparung (9), aufweist.

6. Rückhaltesystem für ein Kraftfahrzeug nach Anspruch 5, **dadurch gekennzeichnet, dass** der Zahn (11) eine Sperrfläche (14) zur Sperrung der Sperrscheibe (6) gegen das Drehen in der Abwickelrichtung der Werkstoffbahn (3) und eine Steuerfläche (15) für den Kontakt mit der Steuerkurve (8) aufweist.

7. Rückhaltesystem für ein Kraftfahrzeug nach einem der Ansprüche 5 oder 6, **dadurch gekennzeichnet, dass** die Steuerkurve (8) durch eine radiale Nockenwelle ausgebildet ist.

8. Rückhaltesystem für ein Kraftfahrzeug nach einem der vorangegangenen Ansprüche, **dadurch gekennzeichnet, dass** die Sperrklinke (10) schwenkbar gelagert ist.

9. Rückhaltesystem für ein Kraftfahrzeug nach Anspruch 8, **dadurch gekennzeichnet, dass** die Sperrklinke (10) eine im wesentlichen U-Form aufweist, welche die Sperrscheibe (6) umschließt, wobei die Sperrklinke (10) mit einem Ende schwenkbar gelagert ist und am gegenüberliegenden Ende eine Verzahnung (13) für die Rotationsbremse (17) aufweist.
